# EUROPÄISCHE PATENTSCHRIFT

(11) **EP 2 112 533 B1**
(45) Veröffentlichungstag und Bekanntmachung des Hinweises auf die Patenterteilung: **26.10.2011**
(21) Anmeldenummer: 09158599.2
(22) Anmeldetag: 23.04.2009
(51) Int. Cl.: G02B 6/00, G01J 1/42

(54) **LED-Linienbeleuchtung**
LED line lighting
Eclairage de lignes DEL

(30) Priorität: 23.04.2008 DE 102008020382
(43) Veröffentlichungstag der Anmeldung: 28.10.2009
(73) Patentinhaber: Chromasens GmbH, 78467 Konstanz (DE)
(72) Erfinder: Frei, Bernhard, 78467, Konstanz (DE)
(74) Vertreter: Ganahl, Bernhard

(56) Entgegenhaltungen:
- WO-A2-2005/008196
- JP-A- 11 017 887
- JP-A- 2004 191 214
- JP-A- 2005 341 602
- US-A- 5 491 336
- US-B1- 7 049 622

## Beschreibung

Die vorliegende Erfindung betrifft eine LED-Linienbeleuchtung. Die Erfindung betrifft insbesondere eine LED-Linienbeleuchtung, die zur zeilenförmigen Beleuchtung eines bestimmten Gegenstandes ausgebildet ist, um den zeilenförmig beleuchteten Bereich mittels einer Zeilenkamera zu erfassen.

Die Erfindung betrifft weiterhin ein Verfahren zum Überwachen eines Lichtstrahlkegels einer Lichtquelle, insbesondere einer LED-Linienbeleuchtung.

LED-Linienbeleuchtungen werden in unterschiedlichen Variationen eingesetzt, insbesondere um Gegenstände zeilenförmig zu beleuchten und den zeilenförmig beleuchteten Bereich mittels einer Zeilenkamera zu erfassen. Eine solche LED-Linienbeleuchtung weist eine Vielzahl von in einer Reihe angeordneten Leuchtdioden auf. Zur Abtastung eines Farbbildes werden weiße Leuchtdioden verwendet. Das von weißen Leuchtdioden abgegebene Licht variiert in Abhängigkeit von der Temperatur und der Alterung in der Intensität als auch in der Lichtfarbe. Weiterhin hat der an den Leuchtdioden angelegte Strom erheblichen Einfluss auf die Intensität und die Lichtfarbe. Daher ist es zweckmäßig, bei Verwendung von weißen Leuchtdioden in einer solchen LED-Linienbeleuchtung das Licht bezüglich der Intensität und der Farbe zu regeln.

Üblicherweise wird am Rand eines zu beleuchtenden Bereiches eine Referenzmarke angebracht, die von der LED-Linienbeleuchtung bestrahlt wird. Diese Referenzmarke wird mittels eines Detektors detektiert und es werden die Helligkeit bzw. die Farbwerte der Referenzmarke bestimmt. Die LED-Linienbeleuchtung wird derart nachgeregelt, dass die Helligkeit und die Farbwerte der Referenzmarke einem vorbestimmten Wert entsprechen. Hierdurch werden eventuelle Schwankungen in der Intensität und der Farbe des ausgestrahlten Lichtes korrigiert.

Bei diesem System ist nachteilig, dass
- die Referenzmarke am Rande des ausgeleuchteten Bereichs den nutzbaren Bereich verringert, wodurch die mögliche Auflösung oder der Durchsatz reduziert ist,
- die Referenzmarke nur von wenigen Leuchtdioden beleuchtet wird, jedoch nicht repräsentativ für die mittleren Eigenschaften der Beleuchtung sein müssen, und
- wenige Staubkörner auf der Referenzmarke genügen, um die detektierte Helligkeit und die detektierte Farbe erheblich zu verändern, was einen erheblichen Einfluss auf die gesamte Wiedergabe hat.

Die EP 694 771 A1 beschreibt eine Vorrichtung zum optischen Überwachen eines Rauchgaszuges eines Dampfgenerators. Bei einer Ausführungsform wird dem zu überwachenden Bereich mittels Lichtleiter Licht zugeführt. Von einer Lichtquelle wird Licht in die Lichtleiter eingekoppelt und die Lichtleiter weisen mit ihren von der Lichtquelle entfernten Enden in Richtung zum überwachenden Bereich, so dass an den Stirnflächen der Lichtleiter das Licht abgegeben wird. Es ist ein Satz weiterer Lichtleiter mit den Stirnflächen jeweils eines Endes zu dem überwachenden Bereich weisend angeordnet. Die anderen Enden sind mit Ihren Stirnflächen an Detektoren gekoppelt, um so die Helligkeit im zu überwachenden Raum detektieren zu können.

Die DE 195 06 809 A1 betrifft eine Vorrichtung zur Digitalisierung von Röntgenbildern. Das zu digitalisierende Röntgenbild wird in einer Halterung zwischen zwei Platten eingelegt. Zum Abtasten des Röntgenbildes ist eine LED-Zeile vorgesehen, die das Röntgenbild streifenförmig beleuchtet, wobei das vom Bild reflektierte Licht mittels einer Faseroptik auf eine zum Röntgenbild parallel angeordnete Detektormatrix gelenkt wird. Die Detektormatrix wandelt die Lichtsignale in elektrische Signale um, so dass von dem Röntgenbild ein digitales Abbild erstellt wird.

Aus der DE 42 00 525 A1 geht ein Fußschalter zur Steuerung der Drehzahl des Antriebsmotors einer Nähmaschine hervor, der durch ein Lichtleiterkabel mit der Nähmaschine verbunden ist. Im Lichtleiterkabel sind mehrer Lichtleiter geführt, die zum einen von mehreren in der Nähmaschine angeordneten Leuchtdioden Licht zum Fußschalter lenken, das im Bereich des Fußschalters aus den Lichtleitern ausgekoppelt wird und in den Satz weiterer Lichtleiter eingekoppelt wird, um zur Nähmaschine zurückgeführt zu werden, um dort von entsprechenden Detektoren erfasst zu werden. Im Fußschalter wird die Menge des Lichtes durch eine dreieckige Unterbrecherplatte, die mit einer Trittplatte verbunden ist, eingestellt. In Abhängigkeit von der Stellung der Unterbrecherplatte gelangt mehr oder weniger Licht zurück zur Nähmaschine.

Die DE 196 26 448 A1 betrifft einen optischen Sensor zum Detektieren der Größe und der Bewegung bestimmter Gegenstände. Dieser Sensor weist einen Laserscanner auf, der derart ausgebildet ist, dass wiederholt ein Lichtstrahl in einer Ebene geschwenkt wird, wobei der Lichtstrahl entlang einer Linie verfährt. Eine erste seitlich einkoppelnde Lichtleitfaser erstreckt sich über den gesamten Schwenkbereich des Laserstrahls. Eine zweite seitlich einkoppelnde Lichtleitfaser ragt nur ein kleines Stück in diesen Schwenkbereich hinein. Beide Lichtleitfasern sind jeweils mit einem optischen Detektor verbunden, der das optische Signal in ein elektrisches Signal umsetzt. Ein Körper, der sich in dem Schwenkbereich des Laserstrahls befindet, erzeugt auf dem ersten Lichtleiter einen Schatten. Die Detektion erfolgt derart, dass zunächst der Laserstrahl am zweiten Lichtleiter den Messvorgang triggert, indem ein kurzzeitiger Lichtpuls in den kurzen in den Schwenkbereich des Laserstrahls vorstehenden Abschnitt des Lichtleiters eingekoppelt wird. Danach wird im ersten Lichtleiter Licht eingekoppelt, sofern er nicht durch den zu detektierenden Körper beschattet wird. Dieser Schatten wird als Dunkelphase im zweiten Lichtleiter detektiert. Der Beginn und das Ende der Schattenphase im ersten Lichtleiter bezüglich des Lichtpulses im zweiten Lichtleiter ergeben eine Aussage über die Größe und den Ort des Körpers, wenn dessen Abstand zum Laserscanner bekannt ist.

Die EP 570 163 A2 betrifft eine Vorrichtung zur optischen Inspektion zylindrischer Oberflächen, insbesondere zur optischen Inspektion von Zigaretten. Diese Vorrichtung weist Lichtquellen auf, die in einer Reihe angeordnet sind. Diese Lichtquellen können Enden von Lichtleitfasern oder Leuchtdioden sein. Die einzelnen Lichtquellen können unterschiedlich angesteuert werden, um eine möglichst optimale Beleuchtung der Zigaretten zu erzielen.

Aus der US 7,049,622 B1 geht ein optischer Positionssensor zum Messen einer Position entlang einer eindimensionalen Kurve hervor. Der Sensor kann zum Beispiel zum Bestimmen der Position einer Grenzlinie zwischen einem klaren und einem opaken Fluid verwendet werden. Der Sensor weist eine Lichtquelle auf und eine primäre Faser, in die das Licht der Lichtquelle eingeführt wird. Parallel zur primären Faser ist eine sekundäre Lichtleitfaser angeordnet, die mit einer Stirnseite an einen optischen Detektor gekoppelt ist, der das in der sekundären Faser aufgenommene Licht detektiert. Der Detektor ist mit einer Steuereinrichtung verbunden, die das Signal auswertet. Ist der Bereich zwischen diesen Fasern abschnittsweise abgedunkelt, beispielsweise durch einen Gegenstand oder eine opake Flüssigkeit, dann vermindert sich das von der sekundären Faser empfangene Licht. Anhand der Helligkeit des in der sekundären Faser empfangenen Lichtes, die mit dem Detektor detektiert wird, kann die Position des Gegenstandes beziehungsweise des opaken Fluides ermittelt werden.

Aus der JP 2005-341602 A geht ein optischer Scanner hervor, der zur Verringerung des Energieverbrauches externes Licht zum Abtasten des Originals verwendet. Hierzu wird eine Lichtführungsplatte eingesetzt, die Licht von außen in das Innere der Vorrichtung leitet.

Aus der JP 2004-191214 A geht eine Zeilenbeleuchtung hervor, die als Lichtquelle mehrere entlang einem Kreisbogen angeordnete Leuchtdioden aufweist. Das Licht der Leuchtdioden wird mittels einer Zylinderlinse auf das abzutastende Objekt fokussiert.

In der JP 11-017887 A ist ein beweglicher Bildsensor beschrieben, der zur Ausleuchtung des Bildbereiches acht Leuchtdioden verwendet, die auf einem Substrat angeordnet sind. Die einzelnen Leuchtdioden sind auf dem Substrat parallel geschaltet. Zu den jeweiligen Leuchtdioden sind Widerstände in Reihe geschaltet. Die Leuchtdioden werden mit der gleichen Spannung betrieben, so dass sie gleichzeitig Licht emittieren.

In der WO 2005/008196 A2 wird eine Vorrichtung zum Bestimmen der Farbtemperatur (TC) einer Lichtquelle beschrieben. Bei diesem Verfahren wird die absolute Intensität einer vorbestimmten blauen Spektralkomponente sowie die Gesamtintensität beziehungsweise Luminanz des Lichtes gemessen. Aus diesen beiden Werten wird der Quotient bestimmt. Dieser Quotient aus der blauen Spektralkomponente geteilt durch die gesamte Lichtintensität steht in einer fast linearen Beziehung zur Farbtemperatur.

In der US 5 491 336 wird eine Linienlichtquelle offenbart, bei der Licht aus einer Anzahl in Reihe angeordneter Lichtquellen über einen Reflektor auf ein Objekt umgelenkt wird.

Mit der Erfindung soll eine LED-Linienbeleuchtung geschaffen werden, die einerseits einfach und kostengünstig ausgebildet ist und andererseits eine Integration in ein optisches System erlaubt, so dass zuverlässig Einstellungen bzgl. der Helligkeit und/oder Farbe möglich sind.

Eine weitere Aufgabe der Erfindung ist die Schaffung eines Verfahrens zum Überwachen des Lichtstrahlkegels einer Lichtquelle, insbesondere einer LED-Linienbeleuchtung.

Die Aufgabe wird durch eine LED-Linienbeleuchtung mit dem Merkmal des Anspruchs 1 und durch ein Verfahren mit den Merkmalen des Anspruchs 13 gelöst. Vorteilhafte Ausgestaltungen sind in den jeweiligen Unteransprüchen angegeben.

Die erfindungsgemäße LED-Linienbeleuchtung umfasst
- in einer Reihe angeordnete Leuchtdioden zum zeilenweisen Beleuchten eines Gegenstandes,
- einen Reflektor (3) mit welchem das von den Leuchtdioden (2) abgestrahlte Licht auf den Gegenstand (4) gelenkt wird,
- eine Lichtleitfaser, die im Bereich des von den Leuchtdioden ausgestrahlten Lichtes angeordnet ist, so dass ein Teil dieses Lichtes in die Lichtleitfaser seitlich eingekoppelt wird,
- einen optischen Detektor zum Detektieren der Helligkeit und/oder der Farbe des in die Lichtleitfaser eingekoppelten Lichtes.

Der optische Detektor kann mit einer Steuereinrichtung verbunden werden, um in Abhängigkeit der detektierten Helligkeit die Leuchtdioden anzusteuern und/oder in Abhängigkeit der detektierten Farbwerte weitere optische Einrichtung derart anzusteuern, dass Veränderungen bzgl. der Farbe kompensiert werden.

Durch das Vorsehen der Lichtleitfaser im Lichtkegel der Leuchtdioden wird ein Teil des von den Leuchtdioden abgestrahlten Lichtes seitlich in die Lichtleitfaser eingekoppelt, d. h., dass das Licht an der Mantelfläche bzw. Umfangsfläche der Lichtleitfaser eingekoppelt wird. Das eingekoppelte Licht wird am Ende der Lichtleitfaser von einem optischen Detektor detektiert, wobei die Helligkeit und/oder die Farbe des eingekoppelten Lichtes bestimmt wird.

Durch das Vorsehen einer Lichtleitfaser wird Licht von einer Vielzahl von Leuchtdioden dem Detektor zugeführt. Hierdurch wird eine Mittelung des Lichtes unterschiedlicher Leuchtdioden erzielt.

Die Lichtleitfaser kann am Rande des Lichtkegels der Leuchtdioden angeordnet sein, so dass sie den zeilenförmig ausgestrahlten Bereich nicht beeinträchtigt. Die Einkopplung des Lichtes in die Lichtleitfaser ist gegenüber Verschmutzung unempfindlich. Die Lichtleitfaser ist ein kostengünstiges optisches Bauteil, das einfach im Lichtkegel der Leuchtdioden angeordnet werden kann und so eine zuverlässige, reproduzierbare Auskopplung von Licht aus dem Lichtkegel bewirkt und dem Detektor zuführt.

Die erfindungsgemäße LED-Linienbeleuchtung ist insbesondere für den industriellen Einsatz zum Überwachen von sich schnell bewegenden Fertigungsbahnen geeignet. Bei solchen Bahnen ist es oft schwierig, im ausgeleuchteten Bereich eine Referenzmarke vorzusehen.

Vorzugsweise wird die Lichtleitfaser etwa parallel zur Reihe der Leuchtdioden angeordnet, und erstreckt sich zweckmäßigerweise über zumindest einen Großteil der Länge der Reihe von Leuchtdioden.

Die Lichtleitfaser weist vorzugsweise an der Umfangsfläche eine raue Oberfläche auf, die die Effizienz zur Einkopplung des Lichtes in die Lichtleitfaser gegenüber einer glatten Oberfläche erheblich steigert.

Ein Ende der Lichtleitfaser ist vorzugsweise mit einem Spiegel versehen. Dieser Spiegel kann an dem Ende der Faser festgeklebt sein, in Form einer Kappe auf das Ende der Faser gesteckt sein oder auf die Stirnfläche der Faser aufgedampft sein. Das Vorsehen des Spiegels bewirkt zum einen, dass Licht, das an diesem Ende aus der Faser austritt, wieder in die Faser zurück reflektiert wird und zur Detektion am Detektor zur Verfügung steht. Des Weiteren wird durch einen solchen Spiegel eine bessere Homogenisierung des Lichtes bewerkstelligt, da der Anteil des im Bereich benachbart zum Spiegel eingekoppelten Lichtes gesteigert wird und so Dämpfungsverlusten aufgrund der Übertragung in der Lichtleitfaser entgegengewirkt wird.

Die Erfindung wird nachfolgend beispielhaft anhand eines in den Zeichnungen dargestellten Ausführungsbeispiels erläutert. Die Zeichnungen zeigen:
- Fig. 1: eine LED-Linienbeleuchtung mit einem Reflektor in einer Stirnansicht,
- Fig. 2: schematisch den Aufbau eines Regelkreises in den die erfindungsgemäße LED-Linienbeleuchtung integriert ist, und
- Fig. 3: den Regelkreis aus Fig. 2 in einem Blockschaltbild.

Die erfindungsgemäße LED-Linienbeleuchtung 1 umfasst in einer Reihe angeordnete Leuchtdioden 2 und einen Reflektor 3, mit welchem das von den Leuchtdioden 2 abgestrahlte Licht auf einen abzutastenden Körper 4 gelenkt wird. Der abzutastende Körper 4 wird mit der LED-Linienbeleuchtung 1 zeilenweise ausgeleuchtet, wobei der zeilenweise ausgeleuchtete Bereich mittels einer Zeilenkamera 5 abgetastet wird.

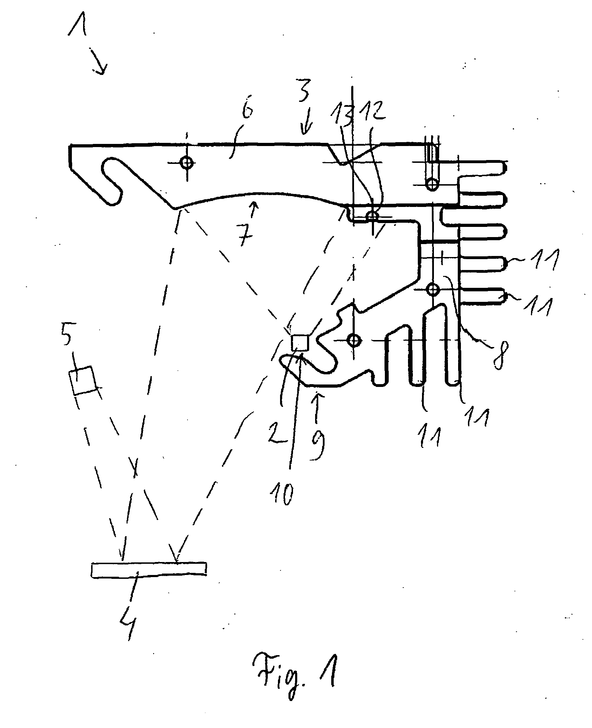

Fig. 1 zeigt ein spezielles Ausführungsbeispiel eines solchen Reflektors 3 in der Seitenansicht. Dieser Reflektor 3 weist eine langgestreckte Reflektorplatte 6 auf, in welcher eine Spiegelfläche 7 ausgebildet ist, die im Querschnitt die Form eines Abschnitts einer Ellipse besitzt. Diese Spiegelfläche 7 bildet somit einen Ellipsoid-Spiegel. An einem Rand der Reflektorplatte 6 ist ein senkrecht abstehender Haltesteg 8 ausgebildet, der mit seinem von der Reflektorplatte 6 entfernten Ende derart abgewinkelt ist, so dass sein freier Rand 9 zur Spiegelfläche 7 gegenüberliegend angeordnet ist. Der Rand 9 des Haltestegs 8 ist zur Aufnahme einer Leuchtdiodenzeile 10 ausgebildet, die an dem Rand mittels einer Steckverbindung oder mittels Löten befestigbar ist. Die Leuchtdiodenzeile 10 weist mehrere in Reihe angeordnete Leuchtdioden 2 auf.

An der von der Reflektorplatte 6 abgewandten Seite des Haltestegs 8 sind Kühlrippen 11 angeformt.

An der Reflektorplatte 6 ist auf der Seite der Spiegelfläche 7 im Bereich zwischen der Spiegelfläche 7 und dem Haltesteg 8 eine langgestreckte Nut 12 zur Aufnahme einer Lichtleitfaser 13 ausgebildet. Die Lichtleitfaser 13 weist zwei Stirnflächen und eine Umfangsfläche bzw. Mantelfläche auf. Die Lichtleitfaser 13 wird von der Nut 12 in einem Bereich von etwa 2/3 der Umfangsfläche eingeschlossen und liegt im übrigen Bereich von 1/3 von der Umfangsfläche frei.

Im vorliegenden Ausführungsbeispiel ist die Lichtleitfaser 13 eine Stufen-Index-Faser mit einem zylindrischen Faserkern und einer konzentrischen Mantelschicht, die einen Brechungsindex niedriger als der des Kernmaterials aufweist. Eine solche Lichtleitfaser ist beispielsweise unter dem Handelsnamen LUMINOUS DB-2000 (Durchmesser: 2,0 mm) von der Firma Asahi Kasei EMD Corporation erhältlich.

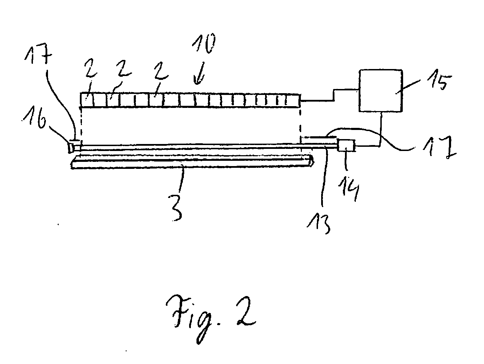

Der Reflektor 3 ist aus einem langgestreckten Aluminiumstrangprofil ausgebildet. Die Lichtleitfaser 13 erstreckt sich vorzugsweise über die gesamte Länge des Reflektors und steht zumindest mit einem Ende am Reflektor 3 vor. An dieses Ende ist ein Detektor 14 (Fig. 2) gekoppelt. Der Detektor 14 ist vorzugsweise ein mehrkanaliger Farbsensor, der die Intensität unterschiedlicher Farbbereiche unabhängig voneinander erfassen kann. Ein solcher Detektor ist beispielsweise unter der Typbezeichnung MCS3AS von der Firma MAZeT GmbH, Deutschland, erhältlich. Der Detektor 14 ist mit einer Steuereinrichtung 15 verbunden. Die Steuereinrichtung 15 dient zur Einstellung der Helligkeit des von den Leuchtdioden abgestrahlten Lichtes. Die Steuereinrichtung 15 kann auch mit der Zeilenkamera 5 zum Detektieren des zeilenweise ausgeleuchteten Bereichs verbunden sein, um die Empfindlichkeit der Zeilenkamera 5 an die Farbverteilung des von den Leuchtdioden abgestrahlten Lichtes anzupassen.

An dem vom Detektor 14 entfernten Ende der Lichtleitfaser 13 ist diese vorzugsweise verspiegelt. Hierzu ist dieses Ende der Lichtleitfaser 13 glatt geschliffen und poliert und mit einem Spiegel 16 versehen. Der Spiegel 16 kann als aufgedampfte Metallschicht oder als Metallkappe, die mit dem Ende der Lichtleitfaser 13 verklebt ist, ausgebildet sein.

Nachfolgend wird die Auskopplung eines Teils des Lichtes mittels der Lichtleitfaser 13 näher erläutert:
Die Leuchtdiodenzeile 10 strahlt Licht in einem vorbestimmten Lichtkegel aus. Dieser Lichtkegel überdeckt die Spiegelfläche 7 des Reflektors 3 sowie den in der Nut 12 freiliegenden Bereich der Umfangsfläche der Lichtleitfaser 13.

Handelsübliche Lichtleitfasern aus Kunststoff besitzen eine gewisse Oberflächenrauigkeit. Dies ermöglicht es, dass ein gewisser Anteil des Lichtes an der Umfangsfläche in die Faser eingekoppelt wird und in Längsrichtung der Lichtleitfaser 13 geleitet wird. Licht, das innerhalb der Lichtleitfaser 13 in Richtung zum Detektor 14 geführt wird, trifft unmittelbar auf den Detektor 14. Licht, das zunächst in die entgegengesetzte Richtung geführt wird, wird vom Spiegel 16 reflektiert und dann auch dem Detektor 14 zugeführt. Ein Teil des Lichtes geht durch Dämpfungsverluste verloren. Die Dämpfungsverluste sind proportional zur Wegstrecke, die das Licht innerhalb der Lichtleitfaser zurück legt. Die Dämpfungsverluste hängen stark von der Einkopplung des Lichtes ab, wobei Lichtstrahlen, die einmal in den Bereich innerhalb des "kritischen Winkels" der Lichtleitfaser gelenkt werden aufgrund der Totalreflektion innerhalb der Lichtleitfaser kaum gedämpft werden.

Deshalb kann es auch zweckmäßig sein, anstelle einer Stufen-Index-Faser eine Gradienten-Index-Faser zu verwenden, die eine gleichmäßigere Einkopplung des Lichtes bewirkt.

Über einen langen Bereich der Lichtleitfaser 13 und vorzugsweise über die gesamte Länge, die der Länge der Leuchtdiodenzeile 10 entspricht, und Licht in die Lichtleitfaser 13 eingekoppelt wird, wird Licht von einer Vielzahl der Leuchtdioden 2 und vorzugsweise von allen Leuchtdioden 2 in die Lichtleitfaser 13 eingekoppelt und dem Detektor 14 zugeführt. Hierdurch gelangt an den Detektor 14 Licht von allen oder fast allen Leuchtdioden 2, so dass die vom Detektor erfasste Helligkeit bzw. erfassten Farbinformationen über eine Vielzahl von Leuchtdioden gemittelte Werte darstellen.

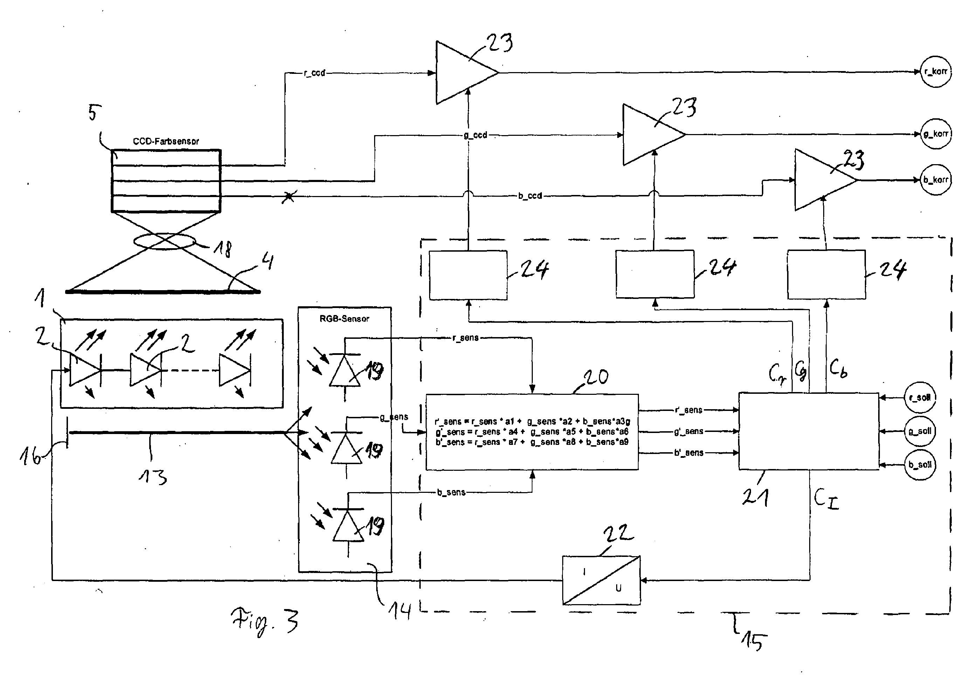

Figur 3 zeigt in einem Blockschaltbild den Regelkreis aus Figur 2, wobei einige Komponenten der Steuereinrichtung gezeigt sind und zur Vereinfachung der Zeichnung der Reflektor 3 in Figur 2 nicht dargestellt ist. Dieser Regelkreis umfasst die LED-Linienbeleuchtung 1 mit mehreren in einer Reihe angeordneter Leuchtdioden 2, den Lichtleiter 13, an dessen einem Ende der Detektor 14 und an dessen anderem Ende der Spiegel 16 angeordnet sind. Das auf den Körper 4 bzw. das Objekt 4 abgestrahlte Licht der Leuchtdioden 2 wird mittels eines Objektivs 18 auf die Zeilenkamera 5 gelenkt. Der Detektor 14 ist ein RGB-Sensor des Typs MCS3AS der Firma MAZeT GmbH. Dieser Detektor weist für die Farben Rot, Grün und Blau jeweils einen Halbleitersensor 19 auf. Jeder der drei Halbleitersensoren 19 erzeugt ein für die Farben Rot, Grün und Blau spezifischen Farbwert r_sens, g_sens und b_sens. Die Steuereinrichtung 15 ist mit einer Farbanpassungseinrichtung 20 versehen, die mittels einer 3x3-Farbkorrekturmatrix mit neun Koeffizienten (a1..., a9) die gemessenen Farbwerte in korrigierte Farbwerte (r'_sens, g'_sens, b'_sens) umsetzt. Diese Umsetzung der Farbwerte dient zur Anpassung der unterschiedlichen farblichen Sensitivität der Zeilenkamera 5 und des Detektors 14. Durch die Farbanpassungseinrichtung 20 wird in Verbindung mit dem Detektor 14 die Farbwahrnehmung der Zeilenkamera 5 simuliert.

Die korrigierten Farbwerte werden einer Regeleinrichtung 21 zugeführt, die als weitere Eingangsparameter Sollwerte für die drei Farben Rot, Grün und Blau (r_soll, g_soll, b_soll) erhält. Die Regeleinrichtung 21 bestimmt Korrekturwerte für die Intensität (C₁) und für die Farben Rot, Grün und Blau (Cᵣ, C_{g}, C_{b}). Diese Korrekturwerte werden als Spannungssignale von der Regeleinrichtung ausgegeben. Das entsprechende Signal für den Korrekturwert der Lichtintensität (C₁) wird einem Spannungs/Stromwandler 22 zugeführt, der mit der LED-Linienbeleuchtung 1 zum Anstrahlen der Intensität des von den Leuchtdioden 2 abgestrahlten Lichtes verbunden ist.

Die Zeilenkamera 5 gibt drei Ausgangssignale für die Farben Rot, Grün und Blau (r_ccd, g_ccd, b_ccd) aus. Diese Ausgangssignale werden jeweils einem entsprechenden Farbkanalverstärker 23 zugeführt.

Die Steuereinrichtung 15 weist für die 3 Korrekturwerte der Farben Rot, Grün und Blau Anpassungselemente 24 auf, die die den Korrekturwerte entsprechenden Spannungssignale in geeignete Verstärkungsfaktoren zum Ansteuern der Farbkanalverstärker 23 umsetzen. Die Ausgangswerte der Farbkanalverstärker 23 (r_korr, g_korr, b_korr) werden somit entsprechend den mittels des Detektors 14 ermittelten Farbwerten des von den Leuchtdioden 2 ausgestrahlten Lichtes korrigiert. Hierdurch ist es möglich, mit der Zeilenkamera 5 Farbbilder konstanter Qualität zu erhalten, auch wenn sich aufgrund von Alterungserscheinungen oder sonstiger Einflüsse die Farbverteilung des von den Leuchtdioden 2 abgestrahlten Lichtes verändert.

Mit der erfindungsgemäßen LED-Linienbeleuchtung 1 wird eine langzeitstabile Farbwiedergabe erzielt, die unabhängig von Verschmutzung und einfach und kostengünstig zu realisieren ist.

Vorzugsweise liegt die Lichtleitfaser nur in einem Bereich frei, der parallel zur Leuchtdiodenzeile 10 angeordnet ist und etwa die Länge der Leuchtdiodenzeile 10 aufweist. D.h., dass die Lichtleitfaser 13 an ihren Enden mit einer Abdeckung 17 versehen ist, wobei sich die Abdeckung 17 vom Detektor 14 bis zum Bereich der Leuchtdiodenzeile 10 bzw. vom Spiegel 16 bis zum Bereich der Leuchtdiodenzeile 10 erstreckt. Durch diese Abdeckung(en) 17 wird verhindert, dass am Randbereich ein überproportional großer Anteil der am Rand der Leuchtdiodenzeile 10 angeordneten Leuchtdioden 2 in die Lichtleitfaser 13 eingekoppelt wird. Diese Abdeckungen 17 dienen somit zur Homogenisierung des eingekoppelten Lichtes.

Im Rahmen der Erfindung kann es auch zweckmäßig sein, die Lichtleitfaser 13 mit einer Abdeckung zu versehen, die derart ausgebildet ist, dass je größer der Abstand zum Detektor 14 ist, desto größer die freiliegende Fläche der Lichtleitfaser 13 ist. Hierdurch wird in den Bereichen, die von dem Detektor 14 weiter entfernt sind, mehr Licht seitlich in die Lichtleitfaser 13 eingekoppelt. Dies kompensiert den Dämpfungseffekt in der Lichtleitfaser, denn weiter entfernt eingekoppeltes Licht wird stärker als näher am Detektor 14 eingekoppeltes Licht gedämpft.

### Bezugszeichenliste

- 1: LED-Linienbeleuchtung
- 2: Leuchtdiode
- 3: Reflektor
- 4: Körper
- 5: Zeilenkamera
- 6: Reflektorplatte
- 7: Spiegelfläche
- 8: Haltesteg
- 9: Rand
- 10: Leuchtdiodenzeile
- 11: Kühlrippe
- 12: Nut
- 13: Lichtleitfaser
- 14: Detektor
- 15: Steuereinrichtung
- 16: Spiegel
- 17: Abdeckung

## Patentansprüche

1. LED-Linienbeleuchtung, umfassend
- in einer Reihe angeordnete Leuchtdioden (2) zum zeilenweisen Beleuchten eines Gegenstandes (4),
- einen Reflektor (3), mit welchem das von den Leuchtdioden (2) abgestrahlte Licht auf den Gegenstand (4) gelenkt wird,
- eine Lichtleitfaser (13), die im Bereich des von den Leuchtdioden ausgestrahlten Lichtes angeordnet ist, so dass ein Teil dieses Lichtes seitlich in die Lichtleitfaser (13) eingekoppelt wird, und
- einen optischen Detektor (14) zum Detektieren der Helligkeit und/oder der Farbe des in die Lichtleitfaser (13) eingekoppelten Lichtes.

2. LED-Linienbeleuchtung nach Anspruch 1,
**dadurch gekennzeichnet,**
**dass** die Lichtleitfaser (13) etwa parallel zur Reihe der Leuchtdioden (2) angeordnet ist.

3. LED-Linienbeleuchtung nach Anspruch 1 oder 2,
**dadurch gekennzeichnet,**
**dass** die Lichtleitfaser (13) eine Stufen-Index-Faser oder eine Gradienten-Index-Faser ist.

4. LED-Linienbeleuchtung nach einem der Ansprüche 1 bis 3,
**dadurch gekennzeichnet,**
**dass** ein Ende der Lichtleitfaser (13) mit einem Spiegel (16) versehen ist und dass am anderen Ende der Lichtleitfaser (13) der optische Detektor (14) angeordnet ist.

5. LED-Linienbeleuchtung nach einem der Ansprüche 1 bis 4,
**dadurch gekennzeichnet,**
**dass** der optische Detektor (14) ein mehrkanaliger Farbsensor ist.

6. LED-Linienbeleuchtung nach einem der Ansprüche 1 bis 5,
**dadurch gekennzeichnet,**
**dass** die Steuereinrichtung (15) mehrere Farbkanalverstärker umfasst.

7. LED-Linienbeleuchtung nach einem der Ansprüche 1 bis 6,
**dadurch gekennzeichnet,**
**dass** die Lichtleitfaser (13) im zum Detektor (14) benachbarten Bereich abgedeckt ist.

8. LED-Linienbeleuchtung nach einem der Ansprüche 1 bis 7,
**dadurch gekennzeichnet,**
**dass** die Lichtleitfaser (13) eine Abdeckung aufweist, die derart ausgebildet ist, so dass je größer der Abstand zum Detektor ist, desto größer die frei liegende Fläche der Lichtleitfaser (13) ist.

9. LED-Linienbeleuchtung nach einem der Ansprüche 1 bis 8,
**dadurch gekennzeichnet,**
**dass** eine Steuereinrichtung (15) zum Ansteuern der Helligkeit nach Maßgabe der vom optischen Detektor (14) detektierten Helligkeit vorgesehen ist.

10. Optische Überwachungseinrichtung mit einer Kamera (5), die einen mittels einer LED-Linienbeleuchtung nach einem der Ansprüche 1 bis 9 ausgeleuchteten Bereich überwacht, wobei eine Steuereinrichtung vorgesehen ist, die in Abhängigkeit der vom optischen Detektor (14) der LED-Linienbeleuchtung ermittelten Farbwerte die Ausgabe der Bildsignale der Kamera (5) korrigiert.

11. Überwachungsvorrichtung nach Anspruch 10,
**dadurch gekennzeichnet,**
**dass** die Steuereinrichtung (15) auch zum Einstellen der Intensität des von den Leuchtdioden (2) abgestrahlten Lichtes ausgebildet ist.

12. Verfahren zum Überwachen eines Lichtstrahlkegels einer Lichtquelle einer LED-Linienbeleuchtung, wobei
mit einem Reflektor (3) Licht auf einen zu beleuchtenden Gegenstand gelenkt wird und eine Lichtleitfaser (13) verwendet wird, um einen Teil des Lichtes des Lichtstrahlkegels zu einem optischen Detektor (14) zu leiten, indem die Lichtleitfaser (13) derart in den Lichtstrahlkegel angeordnet ist, dass Licht an der Umfangsfläche der Lichtleitfaser (13) eingekoppelt und zum optischen Detektor (14) geleitet wird, und der optische Detektor (14) die Helligkeit und/oder Farbe des Lichtes detektiert.

13. Verfahren nach Anspruch 12,
**dadurch gekennzeichnet,**
**dass** nach Maßgabe der detektierten Helligkeit und/oder Farbe die Lichtquelle angesteuert wird.

14. Verfahren nach Anspruch 12,
**dadurch gekennzeichnet,**
**dass** mittels einer Kamera (5) ein Bild eines von der Lichtquelle ausgeleuchteten Gegenstandes aufgenommen wird und das von der Kamera aufgenommene Bild nach Maßgabe der detektierten Helligkeit und/oder Farbe die Lichtquelle korrigiert wird.

## Claims

1. LED line illumination, comprising
- light-emitting diodes (2) arranged in a row for illuminating an object (4) line by line,
- a reflector (3) by means of which the light emitted by the light-emitting diodes (2) is directed onto the object (4),
- an optical fibre (13) arranged in the region of the light emitted by the light-emitting diodes, so that a part of this light is laterally coupled into the optical fibre (13), and
- an optical detector (14) for detecting the brightness and/or the colour of the light coupled into the optical fibre (13).

2. LED line illumination according to claim 1,
**characterised in that**
the optical fibre (13) is arranged approximately parallel to the row of light-emitting diodes (2).

3. LED line illumination according to claim 1 or 2,
**characterised in that**
the optical fibre (13) is a step index fibre or a graded index fibre.

4. LED line illumination according to any of claims 1 to 3,
**characterised in that**
one end of the optical fibre (13) is provided with a mirror (16), and **in that** the optical detector (14) is arranged at the other end of the optical fibre (13).

5. LED line illumination according to any of claims 1 to 4,
**characterised in that**
the optical detector (14) is a multi-channel colour sensor.

6. LED line illumination according to any of claims 1 to 5,
**characterised in that**
the control unit (15) comprises several colour channel amplifiers.

7. LED line illumination according to any of claims 1 to 6,
**characterised in that**
the optical fibre (13) is covered in the region adjacent to the detector (14).

8. LED line illumination according to any of claims 1 to 7,
**characterised in that**
the optical fibre (13) has a cover which is designed such that the exposed surface of the optical fibre (13) is the larger the greater its distance from the detector is.

9. LED line illumination according to any of claims 1 to 8,
**characterised in that**
a control unit (15) is provided for controlling the brightness in accordance with the brightness detected by the optical detector (14).

10. Optical monitoring device, comprising a camera (5) which monitors a region illuminated by means of an LED line illumination according to any of claims 1 to 9, wherein a control unit is provided which corrects the output of the image signals of the camera (5) in dependence on the colour values detected by the optical detector (14) of the LED line illumination.

11. Monitoring device according to claim 10,
**characterised in that**
the control unit (15) is additionally designed for the adjustment of the intensity of the light emitted by the light-emitting diodes (2).

12. Method for monitoring a light ray cone of a light source of an LED line illumination, wherein
light is directed onto an object to be illuminated by means of a reflector (3) and an optical fibre (13) is used to direct a part of the light of the light ray cone to an optical detector (14) by arranging the optical fibre (17) in the light ray cone in such a way that the light is coupled in at the circumferential surface of the optical fibre (13) and directed to the optical detector (14) and the optical detector (14) detects the brightness and/or the colour of the light.

13. Method according to claim 12,
**characterised in that**
the light source is controlled in accordance with the detected brightness and/or colour.

14. Method according to claim 12,
**characterised in that**
an image of the object illuminated by the light source is recorded by means of a camera (5) and the image recorded by the camera is corrected in accordance with the detected brightness and/or colour.

## Revendications

1. Éclairage en ligne à diodes électroluminescentes, comprenant
- des diodes électroluminescentes (2) agencées dans une rangée pour éclairer un objet (4) ligne par ligne,
- un réflecteur (3), au moyen duquel la lumière émise par les diodes électroluminescentes (2) est déviée vers l'objet (4),
- une fibre guide de lumière (13) qui est agencée dans la région de la lumière émise par les diodes électroluminescentes, de sorte qu'une partie de cette lumière est injectée latéralement dans la fibre guide de lumière (13), et
- un détecteur optique (14) pour détecter la luminosité et/ou la couleur de la lumière injectée dans la fibre guide de lumière (13).

2. Éclairage en ligne à diodes électroluminescentes selon la revendication 1,
**caractérisé en ce que** la fibre guide de lumière (13) est agencée approximativement parallèlement à la rangée de diodes électroluminescentes (2).

3. Éclairage en ligne à diodes électroluminescentes selon la revendication 1 ou 2,
**caractérisé en ce que** la fibre guide de lumière (13) est une fibre à indice en gradins ou une fibre à indice en gradient.

4. Éclairage en ligne à diodes électroluminescentes selon l'une des revendications 1 à 3,
**caractérisé en ce qu'**une extrémité de la fibre guide de lumière (13) est pourvue d'un miroir (16), et **en ce que** le détecteur optique (14) est agencé à l'autre extrémité de la fibre guide de lumière (13).

5. Éclairage en ligne à diodes électroluminescentes selon l'une des revendications 1 à 4,
**caractérisé en ce que** le détecteur optique (14) est un capteur de couleurs à plusieurs canaux.

6. Éclairage en ligne à diodes électroluminescentes selon l'une des revendications 1 à 5,
**caractérisé en ce que** le dispositif de commande (15) comprend plusieurs amplificateurs de canaux de couleurs.

7. Éclairage en ligne à diodes électroluminescentes selon l'une des revendications 1 à 6,
**caractérisé en ce que** la fibre guide de lumière (13) est recouverte dans la région voisine du détecteur (14).

8. Éclairage en ligne à diodes électroluminescentes selon l'une des revendications 1 à 7,
**caractérisé en ce que** la fibre guide de lumière (13) comprend une couverture qui est réalisée de telle façon que plus la distance par rapport au détecteur est élevée plus grande est la surface dégagée de la fibre guide de lumière (13).

9. Éclairage en ligne à diodes électroluminescentes selon l'une des revendications 1 à 8,
**caractérisé en ce qu'**il est prévu un dispositif de commande (15) pour piloter la brillance selon la mesure de la brillance détectée par le détecteur optique (14).

10. Système de surveillance optique comprenant une caméra (5) qui surveille une région éclairée au moyen de l'éclairage en ligne à diodes électroluminescentes selon l'une des revendications 1 à 9, dans lequel il est prévu un dispositif de commande qui corrige les signaux image fournis par la caméra (5) en fonction des valeurs de couleur déterminées par le détecteur optique (14) de l'éclairage en ligne à diodes électroluminescentes.

11. Système de surveillance selon la revendication 10,
**caractérisé en ce que** le dispositif de commande (15) est également réalisé pour régler l'intensité de la lumière émise par les diodes électroluminescentes (2).

12. Procédé pour la surveillance d'un cône de rayonnement lumineux émis par une source de lumière dans un éclairage en ligne à diodes électroluminescentes, dans lequel de la lumière est déviée au moyen d'un réflecteur (3) vers un objet à éclairer et on utilise une fibre guide de lumière (13) afin d'amener une partie de la lumière du cône de rayonnement lumineux vers un détecteur optique (14), dans lequel la fibre guide de lumière (13) est agencée dans le cône de rayonnement lumineux de telle façon que la lumière est injectée au niveau de la surface périphérique de la fibre guide de lumière (13) et est amenée au détecteur optique (14), et le détecteur optique (14) détecte la brillance et/ou la couleur de la lumière.

13. Procédé selon la revendication 12,
**caractérisé en ce que** la source de lumière est pilotée selon la mesure de la brillance et/ou de la couleur détectée.

14. Procédé selon la revendication 12,
**caractérisé en ce que** l'on prend au moyen d'une caméra (5) une image d'un objet éclairé par la source de lumière, et **en ce que** l'on corrige l'image prise par la caméra selon la mesure de la brillance et/ou de la couleur détectée de la source de lumière.
